# EUROPÄISCHE PATENTANMELDUNG

(11) **EP 2 962 830 A1**
(43) Veröffentlichungstag der Anmeldung: **06.01.2016**
(21) Anmeldenummer: 14175178.4
(22) Anmeldetag: 01.07.2014
(51) Int. Cl.: B29C 45/14

(54) **Spritzgegossenes Gehäuseelement einer medizinischen oder dentalen Vorrichtung und Spritzgiessverfahren zur Herstellung eines derartigen Gehäuseelements**

(71) Anmelder: W & H Dentalwerk Bürmoos GmbH, 5111 Bürmoos (AT)
(72) Erfinder: Maier, Markus, 84478 Waldkraiburg (DE); Stürzer, Christian, 5113 St. Georgen (AT)
(74) Vertreter: Benda, Ralf

(57) **Zusammenfassung**

Gehäuseelement (11, 21, 31, 41, 51, 61, 71) einer medizinischen oder dentalen Vorrichtung (10, 20, 30, 40, 50, 60), wobei das Gehäuseelement (11, 21, 31, 41, 51, 61, 71) aus mehreren Schichten (1 - 7) aufgebaut ist und einen Innenraum (72) der medizinischen oder dentalen Vorrichtung (10, 20, 30, 40, 50, 60) gegenüber einem Äußeren (73) abgrenzt, wobei die mehreren Schichten (1 - 7) umfassen: Eine erste Kunststofffolie (2) mit einer dem Äußeren (73) zugewandten Außenseite (74) und einer dem Innenraum (72) zugewandten Innenseite (75) und eine Spritzguss-Kunststoffschicht (4), wobei zumindest ein Teil der Innenseite (75) und / oder der Außenseite (74) der ersten Kunststofffolie (2) mit der Spritzguss-Kunststoffschicht (4) überspritzt ist.

## Beschreibung

Die vorliegende Erfindung betrifft ein Gehäuseelement einer medizinischen oder dentalen Vorrichtung und ein Verfahren zur Herstellung eines derartigen Gehäuseelements.

Ein Gehäuseelement einer medizinischen oder dentalen Vorrichtung ist zum Beispiel aus der Patentanmeldung EP 1 887 323 A2 bekannt. Derartige Gehäuse oder Gehäuseelemente bestehen aus Kunststoff und werden üblicherweise in einem Spritzgussverfahren hergestellt. Für optische Anzeigeelemente, zum Beispiel Leuchtdioden oder Bildschirme, oder Bedienelemente sind Durchbrüche in dem Kunststoffgehäuseelement vorgesehen, in welche die optische Anzeigeelemente oder Bedienelemente eingefügt sind. An der Innenseite des Gehäuseelements sind mit den Bedienelementen verbundene Sensoren vorgesehen.

Der vorliegenden Erfindung liegt die Aufgabe zugrunde einen alternativen Aufbau für ein Gehäuseelement einer medizinischen oder dentalen Vorrichtung zu schaffen. Damit soll zumindest einer der folgenden Vorteile erzielt werden: Das Gehäuseelement soll eine durchgehende, glatte Oberfläche ohne Durchbrüche für zum Beispiel optische Anzeigeelemente oder Bedienelemente haben, wodurch die Reinigung erleichtert wird und durch den Wegfall der Durchbrüche Schmutzkanten, an welchen sich Verunreinigungen anhaften oder sammeln, vermieden werden. Das Design des Gehäuseelements, insbesondere die Farbgebung, Logos oder Beschriftungen, sollen in einfacher Weise veränderbar sein. Der Aufbau des Gehäuseelements soll vereinfacht sein, insbesondere in Bezug auf die Verbindung mit einem optischen Anzeigeelement, einem Bedienelement oder einem Sensor. Die dem Äußeren zugewandte Oberfläche des Gehäuses soll eine besonders hohe mechanische Festigkeit haben.

Diese Aufgabe wird gemäß der vorliegenden Erfindung durch ein Gehäuseelement einer medizinischen oder dentalen Vorrichtung mit den Merkmalen des Anspruchs 1 und durch ein Verfahren zur Herstellung eines derartigen Gehäuseelements gemäß Anspruch 13 gelöst. Besonders vorteilhafte Ausführungsformen sind in den Unteransprüchen angeführt.

Das Gehäuseelement einer medizinischen oder dentalen Vorrichtung ist aus mehreren Schichten aufgebaut und grenzt einen Innenraum der medizinischen oder dentalen Vorrichtung gegenüber einem Äußeren ab. Die mehreren Schichten umfassen zumindest eine erste Kunststofffolie mit einer dem Äußeren zugewandten Außenseite und einer dem Innenraum zugewandten Innenseite und eine Spritzguss-Kunststoffschicht, wobei zumindest ein Teil der Innenseite und / oder der Außenseite der ersten Kunststofffolie mit der Spritzguss-Kunststoffschicht überspritzt ist.

Der im Folgenden verwendete Begriff "mehrere Schichten" umfasst sinngemäß zumindest zwei Schichten, insbesondere die erste Kunststofffolie und die Spritzguss-Kunststoffschicht, vorzugsweise mehr als zwei Schichten, insbesondere drei, vier, fünf oder mehr Schichten.

Das Gehäuseelement ist zumindest Teil eines Gehäuses, es kann jedoch auch ein gesamtes Gehäuse bilden. Das Gehäuseelement ist vorzugsweise als Außengehäuseelement ausgebildet, welches einen Innenraum gegenüber dem Äußeren, d.h. der Umgebung abgrenzt. In dem Innenraum ist vorzugsweise zumindest ein Element der medizinischen oder dentalen Vorrichtung angeordnet, zum Beispiel ein Steuer- oder Regelelement, ein Mikrocontroller, ein Schalt- oder Stellelement, eine Medienleitung, ein Lichtleiter, ein elektrischer Leiter, eine Energiequelle, eine Medienquelle, ein Antriebselement, zum Beispiel ein Motor oder ein Welle, etc.

Alternativ ist das Gehäuseelement als Innengehäuseelement ausgebildet, welches einen Innenraum abgrenzt und von einem Außengehäuse umgeben ist. Im Innenraum eines derartigen Innengehäuseelements ist vorzugsweise zumindest ein Element der medizinischen oder dentalen Vorrichtung angeordnet, zum Beispiel ein Steuer- oder Regelelement, ein Mikrocontroller, ein Schalt- oder Stellelement, eine Medienleitung, ein Lichtleiter, ein elektrischer Leiter, eine Energiequelle, eine Medienquelle, ein Antriebselement, zum Beispiel ein Motor oder ein Welle, etc. Besonders bevorzugt ist ein derartiges Innengehäuseelement als gekapseltes oder hermetisch verschlossenes Gehäuse(element) ausgebildet.

Vorzugsweise sind die mehreren Schichten des Gehäuseelements unlösbar miteinander verbunden, insbesondere ohne Luftspalt zwischen den Schichten. Bevorzugt sind zumindest zwei, vorzugsweise mehrere oder alle, Schichten der mehreren Schichten unmittelbar oder direkt miteinander verbunden oder kontaktieren einander. Besonders bevorzug ist zumindest eine der mehreren Schichten, insbesondere die Spritzguss-Kunststoffschicht, auf einer anderen der mehreren Schichten, insbesondere auf der ersten oder einer zweiten Kunststofffolie, ohne Luftspalt aufgetragen oder abgeschieden. Besonders bevorzugt bildet das Gehäuseelement eine Einheit oder ein Mehrschichtsystem aus mehreren unlösbar und / oder ohne Luftspalt miteinander verbundenen und / oder vereinigten und / oder aufeinander abgeschiedenen Schichten. Insbesondere bildet das Gehäuseelement eine Einheit aus mehreren unlösbar miteinander verbundenen und / oder vereinigten und / oder aufeinander abgeschiedenen Schichten, wobei zumindest eine dieser mehreren Schichten, insbesondere die erste oder eine zweite Kunststofffolie, zumindest ein elektrisches leitendes Element aufweist.

Vorzugsweise sind zumindest zwei Schichten des Gehäuseelements, insbesondere die erste Kunststofffolie und die Spritzguss-Kunststoffschicht und / oder die zweite Kunststofffolie und die Spritzguss-Kunststoffschicht, miteinander verschmolzen oder verschweißt, wodurch besonders bevorzugt die unlösbare Verbindung oder Einheit dieser Schichten oder das unlösbare Mehrschichtsystem bewirkt sind, insbesondere ohne Luftspalt. Insbesondere ist damit auch der im Nachstehenden noch mehrmals und im Detail beschriebene unlösbare Einschluss einer elektrisch leitenden Schicht oder eines elektrisch leitenden Elements in dem Gehäuseelement oder die Ausbildung der elektrisch leitenden Schicht oder des elektrisch leitenden Elements als integraler Bestandteil des Gehäuseelements bewirkt. Das Verschmelzen oder Verschweißen der zumindest zwei Schichten wird insbesondere durch das Überspritzen der ersten oder zweiten Kunststofffolie mit der Spritzguss-Kunststoffschicht, vorzugsweise aufgrund der dabei herrschenden Temperaturen und / oder Drücke, bewirkt.

Gemäß einem Ausführungsbeispiel ist zumindest ein Teil oder ein begrenzter Bereich der ersten Kunststofffolie transparent oder transluzid, insbesondere für Licht im sichtbaren Wellenlängenbereich. Gemäß einem alternativen Ausführungsbeispiel ist zumindest ein Abschnitt oder ein begrenzter Bereich der ersten Kunststofffolie farbig bedruckt oder mit einer farbigen Druckschicht versehen. Besonders bevorzugt ist ein erster Abschnitt oder begrenzter Bereich der ersten Kunststofffolie transparent oder transluzid und ein zweiter Abschnitt oder begrenzter Bereich der ersten Kunststofffolie farbig bedruckt oder mit einer farbigen Druckschicht versehen. Aufgrund des zumindest begrenzten, transparenten oder transluziden Bereichs ist es damit in vorteilhafter Weise möglich, zumindest ein optisches Anzeigeelement an der ersten Kunststofffolie, insbesondere an deren Innenseite, derart anzuordnen, dass es von außen erkennbar ist oder darauf dargestellte Zeichen lesbar sind, ohne dass in mehreren oder allen Schichten des Gehäuseelements Durchbrechungen vorzusehen sind. Besonders bevorzugt weisen zumindest die erste Kunststofffolie und eine optional auf der Außenseite der ersten Kunststofffolie vorgesehene, insbesondere kratzfeste, Beschichtung keine Durchbrechung für das optische Anzeigeelement auf.

Vorzugsweise umfasst die erste Kunststofffolie zumindest einen der folgenden Kunststoffe: Polycarbonat, Polystyrol, Polyethylenterephthalat (PET), Polybutylenterephthalat (PBT), Polypropylen oder Blends oder Legierungen der im Vorstehenden genannten Kunststoffe. Selbstverständlich kann die erste Kunststofffolie auch andere Kunststoffe aufweisen.

Vorzugsweise beträgt die Schichtdicke der ersten Kunststofffolie maximal 1 mm, bevorzugt zwischen 100 µm und 900 µm, insbesondere zwischen 450 µm und 650 µm.

Vorzugsweise ist an der Außenseite der ersten Kunststofffolie eine, insbesondere kratzfeste, Beschichtung vorgesehen. Diese, insbesondere kratzfeste, Beschichtung ist insbesondere dazu ausgebildet, die erste Kunststofffolie vor beeinträchtigenden oder zerstörenden mechanischen Einflüssen zu schützen. Die Härte der, insbesondere kratzfesten, Beschichtung ist vorzugsweise höher als die Härte der ersten Kunststofffolie. Die Härte der, insbesondere kratzfesten, Beschichtung beträgt zum Beispiel zumindest 5N Erichsenhärte auf Polycarbonat.

Die, insbesondere kratzfeste, Beschichtung ist vorzugsweise direkt auf die erste Kunststofffolie aufgebracht, insbesondere mittels eines Beschichtungsverfahrens, zum Beispiel mittels Sprühen oder Tauchen.

Zumindest ein Teil oder begrenzter Bereich der, insbesondere kratzfesten, Beschichtung ist vorzugsweise transparent oder transluzid (für Licht im sichtbaren Wellenlängenbereich). Insbesondere ist die Beschichtung dort transparent oder transluzid, wo die Beschichtung über farbigen oder farbig bedruckten Teilen der ersten Kunststofffolie angeordnet ist oder wo (an der Innenseite der ersten Kunststofffolie) zumindest ein optisches Anzeigeelement vorgesehen ist.

Gemäß einem Ausführungsbeispiel umfasst die, insbesondere kratzfeste, Beschichtung zumindest eine Kunststoffverbindung, insbesondere eine Acrylatverbindung, zum Beispiel Methylmethacrylat, eine Epoxidverbindung oder eine Urethanverbindung. Gemäß einem anderen Ausführungsbeispiel umfasst die, insbesondere kratzfeste, Beschichtung einen Lack, zum Beispiel einen Lack auf Epoxidbasis, oder eine Sol-Gel-Schicht, zum Beispiel eine glas-ähnliche Schicht, insbesondere auf Siliziumbasis. Selbstverständlich kann die, insbesondere kratzfeste, Beschichtung auch andere Materialien aufweisen.

Die Spritzguss-Kunststoffschicht ist entweder unmittelbar oder kontaktierend an der Innenseite und / oder Außenseite der ersten Kunststofffolie vorgesehen oder bevorzugt über zumindest eine oder mehrere weitere Schichten mit der ersten Kunststofffolie verbunden, insbesondere unlösbar verbunden. Diese eine oder mehrere weiteren Schichten umfassen zum Beispiel: eine, insbesondere auf die erste Kunststofffolie gedruckte, Farbschicht, eine Schicht mit einem elektrisch leitenden Element oder eine elektrisch leitende, insbesondere metallische Schicht, insbesondere zumindest eine elektrische Leiterbahn, eine Klebe- oder Verbindungsschicht mit einem Klebematerial zur Verbindung von Schichten des Gehäuseelements oder eine zweite Kunststofffolie. Die Spritzguss-Kunststoffschicht ist somit entweder auf der ersten Kunststofffolie oder auf einer der genannten anderen Schichten des Gehäuseelements aufgebracht. Es ist auch möglich, dass die Spritzguss-Kunststoffschicht auf zwei Schichten aufgebracht ist, insbesondere dann, wenn die Flächen der zwei Schichten unterschiedlich groß sind, zum Beispiel wenn eine Farbschicht oder eine elektrisch leitende Schicht nur auf einem Teil der ersten Kunststofffolie vorgesehen ist.

Gemäß einem Ausführungsbeispiel ist die Spritzguss-Kunststoffschicht an der Innenseite der ersten Kunststofffolie angeordnet oder vorgesehen und bildet die innerste der mehreren Schichten des Gehäuseelements. Besonders bevorzugt grenzt die Spritzguss-Kunststoffschicht damit an den Innenraum der medizinischen oder dentalen Vorrichtung oder an ein im Innenraum angeordnetes Element der medizinischen oder dentalen Vorrichtung.

Gemäß einem alternativen Ausführungsbeispiel ist die Spritzguss-Kunststoffschicht zwischen der ersten Kunststofffolie und einer weiteren der mehreren Schichten des Gehäuseelements angeordnet. Besonders bevorzugt verbindet die Spritzguss-Kunststoffschicht somit die erste Kunststofffolie mit zumindest einer weiteren der mehreren Schichten des Gehäuseelements. Diese zumindest eine weitere Schicht umfasst zum Beispiel: eine Farbschicht, eine elektrisch leitende, insbesondere metallische Schicht, eine Schicht mit zumindest einem elektrisch leitenden Element, insbesondere mit zumindest einer elektrischen Leiterbahn, eine Klebe- oder Verbindungsschicht mit einem Klebematerial zur Verbindung von Schichten des Gehäuseelements oder eine zweite Kunststofffolie, an welcher insbesondere ein elektrisch leitendes Element vorgesehen ist. Besonders bevorzugt verbindet die Spritzguss-Kunststoffschicht eine farbig bedruckte erste Kunststofffolie mit einer zweiten Kunststofffolie, an welcher ein elektrisch leitendes Element vorgesehen ist.

Gemäß einem weiteren Ausführungsbeispiel umfassen die mehreren Schichten des Gehäuseelements zumindest zwei (separate oder voneinander getrennte) Spritzguss-Kunststoffschichten, wobei bevorzugt und entsprechend den beiden im Vorstehenden genannten Ausführungsbeispielen eine erste der zumindest zwei Spritzguss-Kunststoffschichten die innerste der mehreren Schichten des Gehäuseelements bildet und eine zweite der zumindest zwei Spritzguss-Kunststoffschichten zwischen der ersten Kunststofffolie und der ersten der zumindest zwei Spritzguss-Kunststoffschichten angeordnet ist.

Gemäß einem anderen Ausführungsbeispiel ist die Spritzguss-Kunststoffschicht an der Außenseite der ersten Kunststofffolie angeordnet oder vorgesehen. Bevorzugt bildet die Spritzguss-Kunststoffschicht die äußerste der mehreren Schichten des Gehäuseelements oder ist an jener Seite, die nicht mit der ersten Kunststofffolie verbunden ist, mit einer, insbesondere kratzfesten, Beschichtung versehen, so wie diese im Vorstehenden beschrieben ist. Besonders bevorzugt weist die erste Kunststofffolie, an deren Außenseite die Spritzguss-Kunststoffschicht vorgesehen ist, zumindest ein elektrisch leitendes Element auf, insbesondere einen Sensor.

Vorzugsweise umfasst die Spritzguss-Kunststoffschicht zumindest einen der folgenden Kunststoffe: Polycarbonat, Polystyrol, Polyethylenterephthalat (PET), Polybutylenterephthalat (PBT), Polypropylen oder Blends oder Legierungen der im Vorstehenden genannten Kunststoffe. Selbstverständlich kann die Spritzguss-Kunststoffschicht auch andere Kunststoffe aufweisen.

Vorzugsweise beträgt die Schichtdicke der Spritzguss-Kunststoffschicht 1,0 mm - 4 mm, besonders bevorzugt 1,5 mm - 3,0 mm. Besonders bevorzugt bildet die Spritzguss-Kunststoffschicht eine das Gehäuseelement festigende oder stabilisierende Schicht.

Vorzugsweise umfasst die Spritzguss-Kunststoffschicht, insbesondere die an den Innenraum der medizinischen oder dentalen Vorrichtung grenzende Spritzguss-Kunststoffschicht, zumindest ein Verbindungselement, zum Beispiel ein Gewinde, einen Schraubdom, einen Schnapphaken, etc., zur Verbindung mit einem Bauteil der medizinischen oder dentalen Vorrichtung.

Gemäß einem Ausführungsbeispiel ist zumindest ein Teil der ersten Kunststofffolie, vorzugsweise der Innenseite der ersten Kunststofffolie, farbig, insbesondere mehrfarbig, bedruckt oder mit einer farbigen Druckschicht versehen. Vorzugsweise ist an der Innenseite der ersten Kunststofffolie eine Farbschicht oder farbige Bedruckungsschicht vorgesehen, welche insbesondere auch eine weitere der mehreren Schichten des Gehäuseelement bilden kann. Besonders bevorzugt umfasst die Farbschicht oder farbige Bedruckungsschicht einen, insbesondere hochtemperaturbeständigen (z.B. größer 200°C), Kunststoff mit darin dispergierten Farbpigmenten.

Vorzugsweise wird die farbige Bedruckung der ersten Kunststofffolie mittels Siebdruck oder Digitaldruck oder Tampondruck durchgeführt. Selbstverständlich sind auch andere Druckverfahren möglich. Damit sind in vorteilhafter und einfacher Weise das Design des Gehäuseelements, insbesondere die Farbgebung, Logos oder Beschriftungen, veränderbar.

Gemäß einem Ausführungsbeispiel ist an der Innenseite der ersten Kunststofffolie zumindest ein optisches Anzeigeelement vorgesehen, zum Beispiel eine Lichtquelle, vorzugsweise ein optisches Halbleiterelement, insbesondere eine oder mehrere LEDs, oder ein Bildschirm, insbesondere ein LCD-Bildschirm, oder ein Touch-Bildschirm oder ein optischer Projektor, der eine Darstellung in Richtung der ersten Kunststofffolie projiziert. Bevorzugt bedeckt die erste Kunststofffolie das optische Anzeigeelement, insbesondere bedeckt es das optische Anzeigeelement vollständig, oder es umgibt das optische Anzeigeelement an mehreren Seiten.

Das zumindest eine optische Anzeigeelement ist insbesondere an einem transparenten oder transluziden Bereich der ersten Kunststofffolie angeordnet, so dass es für einen Anwender von außen (durch die erste Kunststofffolie) erkennbar ist oder darauf dargestellte Zeichen lesbar sind.

Besonders bevorzugt kontaktiert das zumindest eine optische Anzeigeelement die Innenseite der ersten Kunststofffolie, wodurch es besonders gut von außen erkennbar ist. Alternativ ist das optische Anzeigeelement von der ersten Kunststofffolie durch ein transparentes oder transluzides Material oder durch eine transparente oder transluzide Schicht, die insbesondere eine der mehreren Schichten des Gehäuseelements bildet, getrennt. Die transparente oder transluzide Schicht umfasst zum Beispiel eine Spritzguss-Kunststoffschicht.

Besonders bevorzugt weist die Spritzguss-Kunststoffschicht einen Durchbruch oder eine Freistellung auf, in welche(n) das zumindest eine optische Anzeigeelement eingefügt ist. Vorzugsweise ist der Durchbruch fluchtend oder anschließend an einen transparenten oder transluziden Bereich der ersten Kunststofffolie vorgesehen. Falls zwischen der Spritzguss-Kunststoffschicht und der ersten Kunststofffolie zumindest eine weitere der mehreren Schichten des Gehäuseelements angeordnet ist, so weist auch diese zumindest eine weitere Schicht einen Durchbruch oder eine Freistellung auf, welche(r) fluchtend oder anschließend an einen transparenten oder transluziden Bereich der ersten Kunststofffolie vorgesehen ist und an den Durchbruch oder die Freistellung der Spritzguss-Kunststoffschicht anschließt. Diese zumindest eine weitere Schicht umfasst zum Beispiel: eine Farbschicht, eine Schicht mit zumindest einem elektrisch leitenden Element, insbesondere mit zumindest einer elektrischen Leiterbahn, eine Klebe- oder Verbindungsschicht mit einem Klebematerial oder eine zweite Kunststofffolie. Die Durchbrüche der Spritzguss-Kunststoffschicht und der zumindest einen weiteren Schicht bilden somit einen gemeinsamen Durchbruch oder eine gemeinsame Aufnahme für das zumindest eine optische Anzeigeelement.

Vorzugsweise ist das zumindest eine optische Anzeigeelement an den Kanten des Durchbruchs lagerbar oder an der Spritzguss-Kunststoffschicht befestigbar, zum Beispiel eingeklebt, wodurch eine zuverlässige Halterung des optischen Anzeigeelements in oder an dem Gehäuseelement erzielbar ist.

Gemäß einem Ausführungsbeispiel ist an der Innenseite und / oder an der Außenseite der ersten Kunststofffolie zumindest ein elektrisch leitendes Element oder Bauteil vorgesehen, insbesondere eine elektrische Leiterbahn oder ein elektrischer Sensor, zum Beispiel ein kapazitiver oder induktiver Sensor. Das elektrisch leitende Element ist entweder unmittelbar oder kontaktierend an der ersten Kunststofffolie vorgesehen oder alternativ über zumindest eine oder mehrere weitere Schichten mit der ersten Kunststofffolie verbunden, insbesondere unlösbar verbunden. Diese eine oder mehrere weitere Schichten umfassen zum Beispiel: eine Farbschicht, eine Spritzguss-Kunststoffschicht, eine Klebe- oder Verbindungsschicht mit einem Klebematerial zur Verbindung von Schichten des Gehäuseelements oder eine zweite Kunststofffolie.

Bevorzugt bildet das an der ersten Kunststofffolie vorgesehene, zumindest eine elektrisch leitende Element eine der mehreren Schichten des Gehäuseelements, insbesondere eine elektrisch leitende Schicht. Alternativ ist das an der ersten Kunststofffolie vorgesehene, zumindest eine elektrisch leitende Element Teil der ersten Kunststofffolie.

Bevorzugt ist das zumindest eine elektrisch leitende Element, insbesondere die elektrische Leiterbahn oder der elektrische Sensor, oder die elektrisch leitende Schicht auf die erste Kunststofffolie oder auf eine andere Schicht des Gehäuseelements, zum Beispiel auf eine Farbschicht, eine Spritzguss-Kunststoffschicht oder eine zweite Kunststofffolie, gedruckt, zum Beispiel mittels Siebdruck.

Bevorzugt umfasst das zumindest eine elektrisch leitende Element, insbesondere die elektrische Leiterbahn oder der elektrische Sensor, oder die elektrisch leitende Schicht zumindest eines der folgenden Materialien: Gold, Silber, Kupfer oder Legierungen dieser Materialien.

Bevorzugt ist das zumindest eine elektrisch leitende Element, insbesondere die elektrische Leiterbahn oder der elektrische, insbesondere kapazitive oder induktive, Sensor, oder die elektrisch leitende Schicht zwischen zumindest zwei der mehreren Schichten des Gehäuseelements angeordnet und / oder unlösbar mit zumindest einer, vorzugsweise zwei, der mehreren Schichten des Gehäuseelements verbunden. Besonders bevorzugt ist das zumindest eine elektrisch leitende Element, insbesondere die elektrische Leiterbahn oder der elektrische Sensor, oder die elektrisch leitende Schicht in das Gehäuseelement oder in das Mehrschichtsystem integriert oder als Teil davon ausgebildet oder im Inneren des Gehäuseelements oder des Mehrschichtsystems angeordnet, und damit besonders zuverlässig vor externen Einflüssen geschützt. Besonders bevorzugt bildet das zumindest eine elektrisch leitende Element, insbesondere die elektrische Leiterbahn oder der elektrische Sensor, oder die elektrisch leitende Schicht zumindest einen Teil eines Bedien-, oder Betätigungs- oder Stellelements, welches insbesondere (von außen) durch die erste Kunststofffolie betätigbar ist.

Wie im Vorstehenden bereits erwähnt, umfasst das Gehäuseelement gemäß einem Ausführungsbeispiel eine mit der ersten Kunststofffolie direkt oder indirekt verbundene zweite Kunststofffolie, wobei das zumindest eine elektrisch leitende Element oder die elektrisch leitende Schicht auf der zweiten Kunststofffolie vorgesehen, zum Beispiel aufgedruckt, ist. Bevorzugt bildet die zweite Kunststofffolie mit dem elektrisch leitenden Element oder mit der elektrisch leitenden Schicht die innerste der mehreren Schichten des Gehäuseelements. Besonders bevorzugt grenzt die zweite Kunststofffolie mit dem elektrisch leitenden Element oder mit der elektrisch leitenden Schicht an den Innenraum der medizinischen oder dentalen Vorrichtung oder an ein im Innenraum angeordnetes Element der medizinischen oder dentalen Vorrichtung. Damit ist in einfacher Weise eine elektrische Verbindung zwischen dem elektrisch leitenden Element oder der elektrisch leitenden Schicht und einem weiteren elektrischen oder elektronischen Bauteil der medizinischen oder dentalen Vorrichtung, insbesondere in deren Innenraum, herstellbar.

Bevorzugt ist das zumindest eine elektrisch leitende Element oder die elektrisch leitende Schicht zwischen der ersten Kunststofffolie und der zweiten Kunststofffolie oder zwischen der ersten Kunststofffolie und der Spritzguss-Kunststoffschicht angeordnet. Damit ist das elektrisch leitende Element oder die elektrisch leitende Schicht in vorteilhafter Weise integraler und unlösbar verbundener Bestandteil des Gehäuseelements, so wie dies im Vorstehenden bereits beschrieben ist. Insbesondere ist das elektrisch leitende Element oder die elektrisch leitende Schicht vor äußeren negativen Einflüssen, zum Beispiel Verschmutzungen, geschützt.

Gemäß einem Ausführungsbeispiel ist das Gehäuseelement dreidimensional geformt. Das dreidimensional geformte Gehäuseelement weist zum Beispiel zumindest einen Winkel, eine Ecke, eine Kante, einen Rücksprung, einen Vorsprung, eine Schräge, eine Biegung, einen Wölbung oder zumindest zwei relativ zueinander gewinkelt angeordnete und integral miteinander verbundene Teilflächen auf.

Bevorzugt sind zumindest zwei der mehreren Schichten des Gehäuseelements gemeinsam, insbesondere wenn sie unlösbar miteinander verbunden sind, dreidimensional geformt, insbesondere zwei der folgenden, im Vorstehenden bereits genannten Schichten: die erste Kunststofffolie, die an der Außenseite der ersten Kunststofffolie vorgesehene, insbesondere kratzfeste, Beschichtung, eine Farbschicht, eine Schicht mit einem elektrisch leitenden Element oder eine elektrisch leitende Schicht, insbesondere mit zumindest einer elektrischen Leiterbahn, eine Klebe- oder Verbindungsschicht mit einem Klebematerial zur Verbindung von Schichten des Gehäuseelements, die zweite Kunststofffolie.

Besonders bevorzugt ist die an der ersten Kunststofffolie vorgesehene Spritzguss-Kunststoffschicht nach dem dreidimensionalen Formen auf die geformten Schichten des Gehäuseelements aufgebracht oder aufgespritzt.

Gemäß einem Ausführungsbeispiel ist eine medizinische oder dentale Vorrichtung mit einem Gehäuseelement vorgesehen, das aus mehreren Schichten aufgebaut ist und einen Innenraum der medizinischen oder dentalen Vorrichtung gegenüber einem Äußeren abgrenzt, wobei die mehreren Schichten umfassen: Eine erste Kunststofffolie mit einer dem Äußeren zugewandten Außenseite und einer dem Innenraum zugewandten Innenseite und eine Spritzguss-Kunststoffschicht, wobei zumindest ein Teil der Innenseite und / oder der Außenseite der ersten Kunststofffolie mit der Spritzguss-Kunststoffschicht überspritzt ist.

Die medizinische oder dentale Vorrichtung umfasst zum Beispiel:
- eine Steuer- oder Regeleinheit mit zumindest einem Stell- und / oder Bedien- und / oder Betätigungselement und / oder einem Mikrocontroller. Bevorzugt bildet das im Vorstehenden beschriebene, an einer der Schichten des Gehäuseelements vorgesehene elektrisch leitende Element oder die elektrisch leitende Schicht, welche integral und / oder unlösbar in dem Gehäuseelement vorgesehen sind, zumindest einen Teil des zumindest einen Stell- und / oder Bedien- und / oder Betätigungselements. Bevorzugt umfasst die Steuer- oder Regeleinheit ein optisches Anzeigeelement, das insbesondere an der Innenseite der ersten Kunststofffolie vorgesehen ist, so wie dies im Vorstehenden beschrieben ist.
- eine Versorgungseinheit mit zumindest einer Fördervorrichtung für ein Medium und / oder mit einer Energiequelle.
- eine Antriebseinheit zum Antrieb eines medizinischen oder dentalen Instruments mit zumindest einem Antriebselement;
- eine mit einer Hand haltbare Handgriffeinheit zur Übertragung oder Abgabe von Energie und / oder eines Mediums und / oder zum Einwirken auf eine Behandlungsstelle und / oder zum Antrieb eines Werkzeugs;
- eine Übertragungseinheit mit zumindest einem Übertragungselement zur Übertragung von Energie und / oder eines Mediums und / oder einer Antriebsbewegung;
- eine Reinigungs- oder Pflegeeinheit für ein medizinisches oder dentales Instrument mit zumindest einem Reinigungs- oder Pflegeelement zum Reinigen oder Pflegen eines medizinischen oder dentalen Instruments und / oder mit zumindest einem Übertragungselement zur Übertragung eines Reinigungs- oder Pflegemediums auf ein medizinisches oder dentales Instrument.

Selbstverständlich kann die medizinische oder dentale Vorrichtung auch andere Geräte, Instrumente, Vorrichtungen oder Einheiten aufweisen.

Bevorzugt umfassen diese im Vorstehenden genannten Einheiten ein Stell- und / oder Bedien- und / oder Betätigungselement und / oder einen Mikrocontroller, wobei das im Vorstehenden beschriebene an einer der Schichten des Gehäuseelements vorgesehene, elektrisch leitende Element oder die elektrisch leitende, insbesondere metallische, Schicht, welche(s) integral und / oder unlösbar in dem Gehäuseelement vorgesehen ist, zumindest einen Teil des zumindest einen Stell- und / oder Bedien- und / oder Betätigungselements bildet.

Bevorzugt umfassen diese im Vorstehenden genannten Einheiten ein optisches Anzeigeelement, das insbesondere an der Innenseite der ersten Kunststofffolie vorgesehen ist, so wie dies im Vorstehenden beschrieben ist.

Im Folgenden ist ein Verfahren zur Herstellung eines Gehäuseelements einer medizinischen oder dentalen Vorrichtung beschrieben. Das Gehäuseelement ist aus mehreren Schichten aufgebaut und grenzt einen Innenraum gegenüber einem Äußeren ab, wobei die mehreren Schichten eine erste Kunststofffolie mit einer dem Äußeren zugewandten Außenseite und einer dem Innenraum zugewandten Innenseite und eine Spritzguss-Kunststoffschicht umfassen und wobei zumindest ein Teil der Innenseite und / oder der Außenseite der ersten Kunststofffolie mit der Spritzguss-Kunststoffschicht überspritzt ist. Das Verfahren ist durch folgende Schritte definiert: Zur Verfügung stellen der ersten Kunststofffolie und Spritzvergießen zumindest eines Teils der Innenseite und / oder der Außenseite der ersten Kunststofffolie mit einem Spritzgusskunststoff.

Wie im Vorstehenden beschrieben umfasst gemäß einem Ausführungsbeispiel das Gehäuseelement eine, insbesondere kratzfesten, Beschichtung. Das Aufbringen der, insbesondere kratzfesten, Beschichtung auf der Außenseite der ersten Kunststofffolie oder der Spritzguss-Kunststoffschicht erfolgt je nach Materialart der Beschichtung (siehe oben) durch ein Beschichtungsverfahren, zum Beispiel mittels Sprühen oder Tauchen, oder durch ein Sol-Gel-Verfahren. Nach dem Aufbringen auf der Außenseite der ersten Kunststofffolie härtet die, insbesondere kratzfeste, Beschichtung aus, wahlweise vor oder nach der dreidimensionalen Formung des Gehäuseelements. Die, insbesondere kratzfeste, Beschichtung, ist oder wird bevorzugt über die gesamte Außenseite der ersten Kunststofffolie oder der Spritzguss-Kunststoffschicht aufgebracht. Bezüglich weiterer Merkmale der, insbesondere kratzfesten, Beschichtung wird auf das Vorstehende verwiesen.

Das Spritzvergießen an der Innen- oder Außenseite der ersten Kunststofffolie oder direkt der Innen- oder Außenseite der ersten Kunststofffolie mit einem Spritzgusskunststoff ist vorzugsweise der abschließende Schritt des Herstellungsverfahrens. Bevorzugt erfolgt das Spritzvergießen nach der dreidimensionalen Formung des Gehäuseelements.

Durch das Spritzvergießen an der Innenseite der ersten Kunststofffolie wird insbesondere das zumindest eine elektrisch leitende Element, insbesondere eine elektrische Leiterbahn oder einen Sensor, oder die elektrisch leitende Schicht unlösbar zwischen der ersten Kunststofffolie und zumindest einer weiteren der mehreren Schichten des Gehäuseelements, insbesondere der Spritzguss-Kunststoffschicht, eingeschlossen, insbesondere dicht (d.h. ohne Luftspalt) eingeschlossen, so dass das zumindest eine elektrisch leitende Element oder die elektrisch leitende Schicht integraler Teil des Gehäuseelements sind und / oder im Inneren des Gehäuseelements angeordnet sind. Bezüglich weiterer Merkmale des Spritzvergießens und des Spritzgusskunststoffs wird auf das Vorstehende verwiesen.

Gemäß einem Ausführungsbeispiel wird zumindest ein Teil der Innenseite der ersten Kunststofffolie farbig, insbesondere mehrfarbig, bedruckt oder mit einer farbigen Druckschicht versehen. Die Bedruckung umfasst zum Beispiel zumindest ein alphanumerisches Zeichen, ein graphisches Zeichen, ein Logo, ein Muster oder eine flächige oder linienförmige Färbung. Bezüglich weiterer Merkmale der farbigen Bedruckung der Innenseite der ersten Kunststofffolie wird auf das Vorstehende verwiesen.

Gemäß einem Ausführungsbeispiel wird zumindest ein elektrisch leitendes Element oder eine elektrisch leitende, insbesondere metallische, Schicht auf die Innenseite oder an der Innenseite der ersten Kunststofffolie, insbesondere auf eine oder mehrere weitere der mehreren Schichten des Gehäuseelements, gedruckt. Die eine oder mehrere weitere Schicht(en) umfasst zum Beispiel eine Farbschicht, eine Spritzguss-Kunststoffschicht, eine Klebe- oder Verbindungsschicht mit einem Klebematerial zur Verbindung von Schichten des Gehäuseelements oder eine zweite Kunststofffolie.

Die Bedruckung wird zum Beispiel mittels Siebdruck oder einem anderen Druckverfahren durchgeführt.

Besonders bevorzugt wird eine zweite Kunststofffolie mit zumindest einem elektrisch leitenden Element, insbesondere einer elektrischen Leiterbahn oder einem Sensor, oder einer elektrisch leitenden Schicht bedruckt und / oder zur Verfügung gestellt, wobei die zweite Kunststofffolie mit der ersten Kunststofffolie verbunden wird, so dass das zumindest eine elektrisch leitende Element, insbesondere ein Sensor, oder die elektrisch leitende Schicht, insbesondere unlösbar, im Inneren des Gehäuseelements und / oder zwischen der ersten und zweiten Kunststofffolie angeordnet ist.

Nach dem Drucken des zumindest einen elektrisch leitenden Elements oder der elektrisch leitenden Schicht wird bevorzugt eine weitere der mehreren Schichten des Gehäuseelements auf das zumindest eine elektrisch leitende Element oder die elektrisch leitende Schicht aufgebracht, so dass das zumindest eine elektrisch leitende Element oder die elektrisch leitende Schicht, insbesondere unlösbar, im Inneren des Gehäuseelements angeordnet ist. Bezüglich weiterer Merkmale des elektrisch leitenden Elements oder der elektrisch leitenden Schicht wird auf das Vorstehende verwiesen.

Gemäß einem Ausführungsbeispiel wird an der Innenseite der ersten Kunststofffolie zumindest ein optisches Anzeigeelement angeordnet, insbesondere derart, dass das zumindest eine optische Anzeigeelement die Innenseite der ersten Kunststofffolie kontaktiert. Das optische Anzeigeelement umfasst zum Beispiel eine Lichtquelle, insbesondere eine oder mehrere LEDs, oder einen (LCD-)Bildschirm oder einen Touch-Bildschirm oder einen optischen Projektor, der eine Darstellung in Richtung der ersten Kunststofffolie projiziert.

Bevorzugt wird bei der Herstellung der an der Innenseite der ersten Kunststofffolie angeordneten Schicht(en) ein Durchbruch oder eine Freistellung vorgesehen, so dass das zumindest eine optische Anzeigeelement an die erste Kunststofffolie angenähert und / oder kontaktierend daran angeordnet werden kann. Bevorzugt wird das zumindest eine optische Anzeigeelement durch den Durchbruch oder die Freistellung eingebracht und an die erste Kunststofffolie angenähert und / oder kontaktierend daran angeordnet. Bezüglich weiterer Merkmale des zumindest einen optischen Anzeigeelements und dessen Anordnung wird auf das Vorstehende verwiesen.

Gemäß einem Ausführungsbeispiel wird das Gehäuseelement dreidimensional geformt. Bevorzugt werden zumindest zwei der mehreren Schichten des Gehäuseelements gemeinsam, insbesondere wenn sie unlösbar miteinander verbunden sind, dreidimensional geformt, insbesondere zwei der folgenden Schichten: die erste Kunststofffolie, die, insbesondere kratzfeste, Beschichtung, eine Farbschicht, eine elektrisch leitende, insbesondere metallische, Schicht, eine Schicht mit zumindest einem elektrisch leitenden Element, insbesondere mit zumindest einer elektrischen Leiterbahn, eine Schicht mit einem Klebematerial zur Verbindung von Schichten des Gehäuseelements, eine zweite Kunststofffolie.

Besonders bevorzugt wird die an der Innenseite der ersten Kunststofffolie vorgesehene Spritzguss-Kunststoffschicht nach dem dreidimensionalen Formen auf die geformten Schichten des Gehäuseelements aufgebracht oder aufgespritzt.

Bevorzugt wird das Formen der Schichten des Gehäuseelements in einem eigenen Werkzeug durchgeführt, zum Beispiel in einem Umformwerkzeug, vorzugsweise mit einem Thermoformwerkzeug, zum Beispiel mit einem mechanischen Stempel oder durch Anlegen von Über- oder Unterdruck. Besonders bevorzugt wird anschließend an das Formen die an der Innenseite der ersten Kunststofffolie vorgesehene Spritzguss-Kunststoffschicht in einem eigenen Spritzgusswerkzeug aufgebracht.

Alternativ wird das dreidimensionale Formen der Schichten des Gehäuseelements und das Spritzvergießen der Spritzguss-Kunststoffschicht in demselben (Spritzguss-)Werkzeug durchgeführt. Bezüglich weiterer Merkmale der dreidimensionalen Formung und insbesondere bevorzugter Formen wird auf das Vorstehende verwiesen.

Die Erfindung wird nachfolgend anhand bevorzugter Ausführungsbeispiele und Bezug nehmend auf die beigefügten Zeichnungen erläutert. Es zeigt die
Figur 1 eine schematische Darstellung eines ersten Ausführungsbeispiels eines Schichtaufbaus eines mehrschichtigen Gehäuseelements einer medizinischen oder dentalen Vorrichtung;
Figur 2 eine schematische Darstellung eines zweiten Ausführungsbeispiels eines Schichtaufbaus eines mehrschichtigen Gehäuseelements einer medizinischen oder dentalen Vorrichtung;
Figur 3 eine schematische Darstellung eines dritten Ausführungsbeispiels eines Schichtaufbaus eines mehrschichtigen Gehäuseelements einer medizinischen oder dentalen Vorrichtung;
Figur 4 eine schematische Darstellung eines mehrschichtigen Gehäuseelements einer medizinischen oder dentalen Vorrichtung mit einem optischen Anzeigeelement und einem Bedien- oder Stellelement;
Figur 5 eine schematische Darstellung eines mehrschichtigen Gehäuseelements mit einer Freistellung zum Einfügen eines optischen Anzeigeelements;
Figur 6 ein erstes Ausführungsbeispiel einer medizinischen oder dentalen Vorrichtung, die eine kombinierte Steuer- oder Regel- und Versorgungseinheit und eine mit einer Hand haltbare Handgriffeinheit aufweist, wobei zumindest ein Teil der medizinischen oder dentalen Vorrichtung ein mehrschichtiges Gehäuseelement umfasst.
Figur 7 ein zweites Ausführungsbeispiel einer medizinischen oder dentalen Vorrichtung, die eine per Fuß betätigbare Steuer- oder Regeleinheit aufweist, wobei zumindest ein Teil der medizinischen oder dentalen Vorrichtung ein mehrschichtiges Gehäuseelement umfasst.
Figur 8 ein drittes Ausführungsbeispiel einer medizinischen oder dentalen Vorrichtung, die eine Steuer- oder Regeleinheit, einen Patientenstuhl und eine Beleuchtungseinheit aufweist, wobei zumindest ein Teil der medizinischen oder dentalen Vorrichtung ein mehrschichtiges Gehäuseelement umfasst.
Figur 9 ein viertes Ausführungsbeispiel einer medizinischen oder dentalen Vorrichtung, die eine Antriebseinheit zum Antrieb eines medizinischen oder dentalen Instruments und eine Handgriffeinheit zum Antrieb eines Werkzeugs aufweist, wobei zumindest ein Teil der medizinischen oder dentalen Vorrichtung ein mehrschichtiges Gehäuseelement umfasst.
Figur 10 ein fünftes Ausführungsbeispiel einer medizinischen oder dentalen Vorrichtung, die eine Reinigungs- oder Pflegeeinheit für ein medizinisches oder dentales Instrument aufweist, wobei zumindest ein Teil der medizinischen oder dentalen Vorrichtung ein mehrschichtiges Gehäuseelement umfasst.
Figur 11 ein weiteres Ausführungsbeispiel eines Schichtaufbaus eines mehrschichtigen Gehäuseelements.

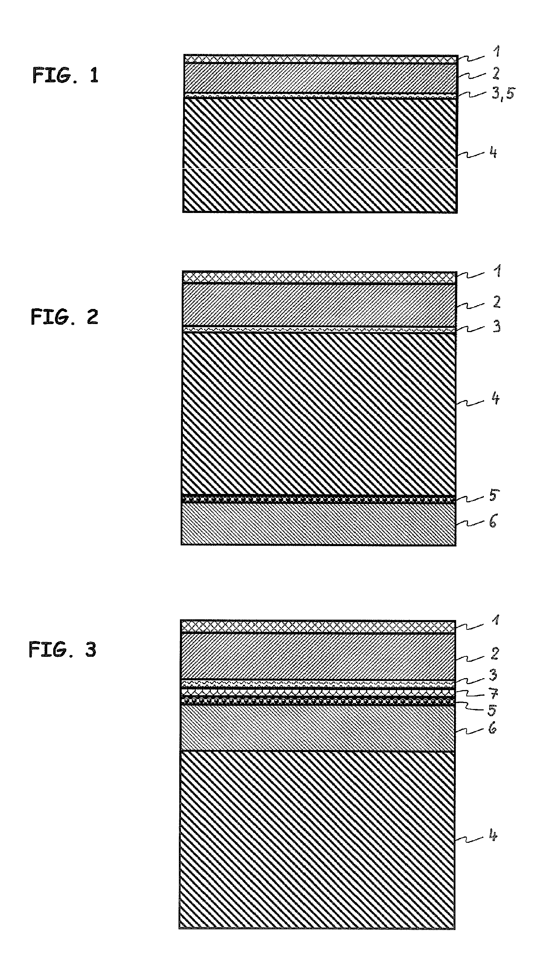

Das in der Figur 1 dargestellte erste Ausführungsbeispiel eines Schichtaufbaus eines mehrschichtigen Gehäuseelements einer medizinischen oder dentalen Vorrichtung umfasst folgende Schichten: eine, insbesondere kratzfeste, Beschichtung 1, eine erste Kunststofffolie 2 und eine Spritzguss-Kunststoffschicht 4. Vorzugsweise ist / sind als weitere Schicht(en) ein farbige Druckschicht 3 und / oder eine elektrisch leitende, insbesondere metallische, Schicht 5 vorgesehen. Alternativ ist die erste Kunststofffolie 2 zumindest teilweise farbig bedruckt und / oder mit zumindest einem elektrisch leitenden Element 5 versehen, insbesondere bedruckt.

Das in der Figur 2 dargestellte zweite Ausführungsbeispiel eines Schichtaufbaus eines mehrschichtigen Gehäuseelements einer medizinischen oder dentalen Vorrichtung umfasst folgende Schichten: eine, insbesondere kratzfeste, Beschichtung 1, eine erste Kunststofffolie 2, die zumindest teilweise farbig bedruckt ist oder ein farbige Druckschicht 3 aufweist, eine Spritzguss-Kunststoffschicht 4, eine elektrisch leitende, insbesondere metallische, Schicht 5 oder zumindest ein auf der Spritzguss-Kunststoffschicht 4 aufgebrachtes, insbesondere gedrucktes, elektrisch leitendes Element 5 und eine zweite Kunststofffolie 6.

Das in der Figur 3 dargestellte dritte Ausführungsbeispiel eines Schichtaufbaus eines mehrschichtigen Gehäuseelements einer medizinischen oder dentalen Vorrichtung umfasst folgende Schichten: eine, insbesondere kratzfeste, Beschichtung 1, eine erste Kunststofffolie 2, die zumindest teilweise farbig bedruckt ist oder ein farbige Druckschicht 3 aufweist, eine Spritzguss-Kunststoffschicht 4, eine Klebe- oder Verbindungsschicht 7, eine zweite Kunststofffolie 6 und eine elektrisch leitende, insbesondere metallische, Schicht 5 oder zumindest ein auf der zweiten Kunststofffolie 6 aufgebrachtes, insbesondere gedrucktes, elektrisch leitendes Element 5.

Den drei Ausführungsbeispielen der Figuren 1 - 3 sind folgende Merkmale gemein: Die Schichten 1 - 7 sind im Wesentlichen flächig ausgebildet. Die Fläche der elektrisch leitenden Schicht 5, die zum Beispiel einen oder mehrere elektrische Leiter aufweist, ist bevorzugt kleiner als die Flächen der anderen Schichten 1- 4, 6, 7. Entsprechendes gilt selbstverständlich für ein elektrisch leitendes Element 5, das auf die erste oder zweite Kunststofffolie 2, 6 aufgebracht oder gedruckt ist. Die Fläche der farbigen Druckschicht 3 ist bevorzugt dann kleiner als die Flächen der Schichten 1, 2, 4, 6, 7, wenn nur ein Teil oder Abschnitt des Gehäuseelements oder der ersten Kunststofffolie 2 farbig bedruckt ist.

Bevorzugt umfasst die elektrisch leitende Schicht 5 oder das zumindest eine elektrisch leitende Bauteil nur einen elektrischen Leiter oder mehrere, voneinander beabstandete elektrische Leiter, so dass zumindest zwei andere Schichten, zwischen denen dieser zumindest eine elektrische Leiter angeordnet ist, dort miteinander verbunden sind, insbesondere unlösbar miteinander verbunden sind, wo dieser zumindest eine elektrische Leiter nicht vorgesehen ist. Zwei derart miteinander verbundene oder einander kontaktierende Schichten sind zum Beispiel die Schichten 4 und 6 (Fig. 2) oder die Schichten 6 und 7 (Fig. 3). Diese einander kontaktierenden Schichten 4, 6 oder 6, 7 sind insbesondere auch als elektrische Isolatoren ausgebildet. Damit ist besonders bevorzugt die elektrisch leitende Schicht 5 oder das zumindest eine elektrisch leitende Bauteil, insbesondere der zumindest eine elektrische Leiter, oder ein elektrischer Sensor, insbesondere ein kapazitiver oder induktiver Sensor, vorzugsweise unlösbar, von den Schichten 1 - 4, 6, 7 umschlossen oder in dem Gehäuseelement eingeschlossen, insbesondere dicht und ohne Luftspalt eingeschlossen. Diese Integration der zumindest einen elektrisch leitenden Schicht 5 oder des zumindest einen elektrisch leitenden Bauteils, insbesondere zumindest einer elektrischen Leiterbahn oder eines elektrischen Sensors, gilt ausdrücklich für alle offenbarten Gehäuseelemente, unabhängig von der Anzahl oder der Anordnung der Schichten 1 - 7.

In entsprechender Weise gilt auch für die farbige Druckschicht oder Bedruckung 3, dass dort, wo keine farbige Druckschicht oder Bedruckung 3 aufgebracht ist, jene Schichten, zwischen denen die farbige Druckschicht 3 aufgebracht ist, einander kontaktieren oder unlösbar miteinander verbunden sind, zum Beispiel die Schichten 2 und 4 (Fig. 2) oder 2 und 7 (Fig. 3).

Die Schichtdicken der Schichten 1 - 7 sind bevorzugt unterschiedlich, wobei die in den Figuren 1 - 3 dargestellten Relationen der Schichtdicken der einzelnen Schichten 1 - 7 korrekt wiedergegeben sind, d.h. zum Beispiel ist die Spritzguss-Kunststoffschicht 4 die dickste aller Schichten 1 - 7 oder es sind die farbige Druckschicht 3 und die eine elektrisch leitende Schicht 5 oder das zumindest eine elektrisch leitende Element dünner als die Spritzguss-Kunststoffschicht 4 oder die erste oder zweite Kunststofffolie 6.

Die Dicke aller Schichten 1 - 4, 1 - 6 oder 1 - 7 zusammen oder die Dicke des durch diese genannten Schichten gebildeten Gehäuseelements beträgt vorzugsweise 1,0 - 5,0 mm, insbesondere 3,0 - 4,0 mm und ist klarerweise u.a. von der Anzahl der Schichten 1 - 7 abhängig.

In Bezug auf die Materialhärte weist die, insbesondere kratzfeste, Beschichtung 1 die höchste Härte aller genannten Kunststoffschichten auf.

Unter Bezugnahme auf die Figuren 1 - 3 und die Figur 5 ist des Weiteren erkennbar, dass das mehrschichtige Gehäuseelement 71 einen Innenraum 72 einer medizinischen oder dentalen Vorrichtung gegenüber einem Äußeren 73 abgrenzt. Entsprechend umfasst die erste Kunststofffolie 2 eine dem Äußeren 73 zugewandten Außenseite 74 und einer dem Innenraum 72 zugewandten Innenseite 75. Im Innenraum 72 ist bevorzugt zumindest ein Bauteil der medizinischen oder dentalen Vorrichtung angeordnet, zum Beispiel ein Steuer- oder Regelelement, ein Mikrokontroller, ein Antriebselement oder ein Übertragungs-, Leitungs- oder Versorgungselement.

Allen Ausführungsbeispielen der Figuren 1 - 3 und 5 ist des Weiteren gemein, dass die, insbesondere kratzfeste, Beschichtung 1 an der Außenseite 74 der ersten Kunststofffolie 2 angeordnet ist oder das Gehäuseelement 71 gegenüber dem Äußeren 73 abgrenzt. Das Äußere 73 umfasst zum Beispiel die Umgebung, so dass die Beschichtung 1 insbesondere die Oberfläche einer medizinischen oder dentalen Vorrichtung bildet. Alternativ ist das Äußere ein (weiterer) Innenraum einer medizinischen oder dentalen Vorrichtung, wenn das Gehäuseelement 71 zum Beispiel im Inneren einer medizinischen oder dentalen Vorrichtung angeordnet ist oder von einem weiteren Bauteil der medizinischen oder dentalen Vorrichtung umgeben ist.

Gemäß den Ausführungsbeispielen der Figuren 1 - 3 und 5 sind mit Ausnahme der Beschichtung 1 alle Schichten 3 - 7 an der Innenseite 75 der ersten Kunststofffolie 2 vorgesehen. Die Schichten 3 - 7 sind somit alle direkt oder indirekt mit der ersten Kunststofffolie 2 verbunden.

Bevorzugt ist die erste Kunststofffolie 2 transparent und unmittelbar auf der ersten Kunststofffolie 2 ist die farbige Bedruckung oder Druckschicht 3 aufgebracht, so dass die farbige Bedruckung oder Druckschicht 3 für einen Betrachter von außen insbesondere die optische Erscheinung oder das farbliche Design des Gehäuseelements einschließlich einer Beschriftung oder eines Logos bildet.

Im Folgenden sind die wesentlichen Unterschiede zwischen den Ausführungsbeispielen der Figuren 1, 2 und 3 erläutert:

Gemäß den Figuren 1 und 3 bildet die Spritzguss-Kunststoffschicht 4 die innerste Schicht des Gehäuseelements 71 oder sie grenzt das Gehäuseelement 71 gegenüber dem Innenraum 72 ab. Gemäß der Figur 2 ist die Spritzguss-Kunststoffschicht 4 zwischen anderen Schichten des Gehäuseelements 71 angeordnet und grenzt zum Beispiel unmittelbar an die elektrisch leitende Schicht 5 (und gegebenenfalls an die zweite Kunststofffolie 6, wenn die Schicht oder das zumindest eine elektrisch leitende Element 5 nicht flächig ausgebildet sind, wie dies im Vorstehenden beschrieben ist) und an die farbige Druckschicht 3 (und gegebenenfalls an die erste Kunststofffolie 2, wenn die Schicht 3 nicht flächig ausgebildet ist, wie dies im Vorstehenden beschrieben ist).

Gemäß der Figur 2 bildet die zweite Kunststofffolie 6, auf welcher die zumindest eine elektrisch leitende Schicht oder das zumindest eine elektrisch leitende Element 5 vorgesehen ist, die innerste Schicht des Gehäuseelements 71 oder sie grenzt das Gehäuseelement 71 gegenüber dem Innenraum 72 ab.

Gemäß einem Ausführungsbeispiel ist die elektrisch leitende Schicht oder das zumindest eine elektrisch leitende Element 5 unmittelbar auf der ersten Kunststofffolie 2 vorgesehen, insbesondere darauf aufgedruckt. Die Schicht oder das Element 5 können wahlweise anstelle der farbigen Druckschicht 3, zwischen der farbigen Druckschicht 3 und der ersten Kunststofffolie 2 oder abwechselnd mit der farbigen Druckschicht 3 (so dass entweder die Schicht oder das Element 5 oder die Schicht 3 unmittelbar auf die erste Kunststofffolie 2 gedruckt sind) vorgesehen sein. Eine derartige abwechselnde Anordnung der Schichten 3 und 5 ist beispielsweise in der Figur 1 dargestellt, wobei in Bezug auf die Schnittebene durch das Gehäuseelement die Schicht oder das Element 5 hinter der dargestellten Schicht 3 angeordnet sind.

Alternativ ist die elektrisch leitende Schicht oder das zumindest eine elektrisch leitende Element 5 unmittelbar auf der zweiten Kunststofffolie 6 vorgesehen, insbesondere darauf aufgedruckt (siehe Figuren 2, 3) und durch zumindest eine weitere Schicht 3, 4 (Figur 2) oder 3, 7 (Figur 3) des Gehäuseelements mit der ersten Kunststofffolie 2 verbunden. In jedem Fall ist die elektrisch leitende Schicht oder das zumindest eine elektrisch leitende Element 5 zwischen anderen Schichten 1 - 4, 6, 7 des Gehäuseelements angeordnet oder eingeschlossen, insbesondere dicht ohne Luftspalt eingeschlossen, und insbesondere integraler, unlösbarer Teil des Gehäuseelements.

Die in der Figur 3 dargestellte Klebe- oder Verbindungsschicht 7 verbindet insbesondere die zweite Kunststofffolie 6, auf welcher die zumindest eine elektrisch leitende Schicht oder das zumindest eine elektrisch leitende Bauteil 5 vorgesehen sind, mit der ersten Kunststofffolie 2. Gemäß einem Ausführungsbeispiel umfasst die Klebe- oder Verbindungsschicht 7 eine Spritzguss-Kunststoffschicht, insbesondere eine mit der Spritzguss-Kunststoffschicht 4 idente Spritzguss-Kunststoffschicht. Alternativ umfasst die Klebe- oder Verbindungsschicht 7 zum Beispiel einen Polyurethan-, Silikon- oder Epoxy-Klebstoff.

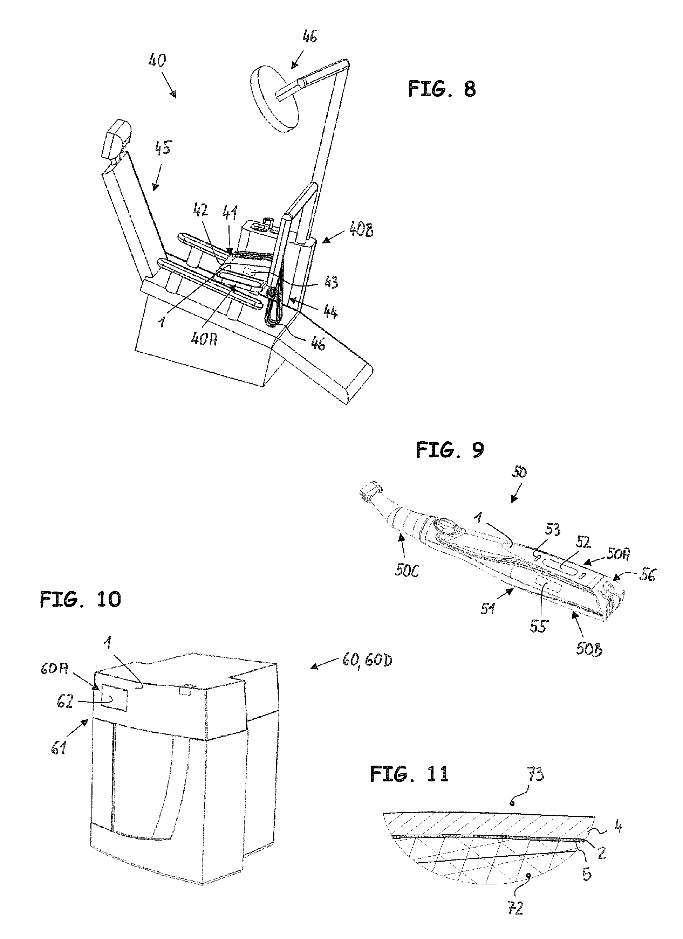

Das in der Figur 11 dargestellte Ausführungsbeispiel eines Schichtaufbaus eines mehrschichtigen Gehäuseelements einer medizinischen oder dentalen Vorrichtung umfasst folgende Schichten: eine erste Kunststofffolie 2, eine Spritzguss-Kunststoffschicht 4 und eine elektrisch leitende, insbesondere metallische, Schicht oder zumindest ein auf der zweiten Kunststofffolie 6 aufgebrachtes, insbesondere gedrucktes, elektrisch leitendes Element 5. Vorzugsweise kann an jener Seite der Spritzguss-Kunststoffschicht 4, die nicht an die erste Kunststofffolie 2 grenzt, eine , insbesondere kratzfeste, Beschichtung vorgesehen sein (nicht dargestellt).

Bei dem Ausführungsbeispiel gemäß Figur 11 bildet die Spritzguss-Kunststoffschicht 4 vorzugsweise die äußerste Schicht des Gehäuseelements, d.h. sie grenzt unmittelbar an das Äußere oder die Umgebung 73.

Vorzugsweise ist die Spritzguss-Kunststoffschicht 4 an der Außenseite der ersten Kunststofffolie 2 angeordnet. Bevorzugt ist an der Innenseite der ersten Kunststofffolie 2 eine elektrisch leitende Schicht oder zumindest ein elektrisch leitendes Element 5 vorgesehen, insbesondere abgeschieden oder gedruckt. Besonders bevorzugt grenzen die erste Kunststofffolie 2 und / oder eine elektrisch leitende Schicht oder zumindest ein an der ersten Kunststofffolie 2 vorgesehenes elektrisch leitendes Element 5 an den Innenraum 72.

Alternativ ist an der Innenseite der ersten Kunststofffolie 2 eine weitere Schicht des Gehäuseelements vorgesehen, so dass die elektrisch leitende Schicht oder das zumindest eine elektrisch leitende Element 5 zwischen zwei Schichten des Gehäuseelements, insbesondere dicht (d.h. ohne Luftspalt), eingeschlossen ist.

Der in der Figur 11 dargestellte Schichtaufbaus eines mehrschichtigen Gehäuseelements findet zum Beispiel bei der Außen- oder Griffhülse eines Hand- oder Winkelstücks eine vorteilhafte Anwendung. Die elektrisch leitende Schicht oder das elektrisch leitende Element 5 sind hierbei geschützt im Inneren des Hand- oder Winkelstücks angeordnet.

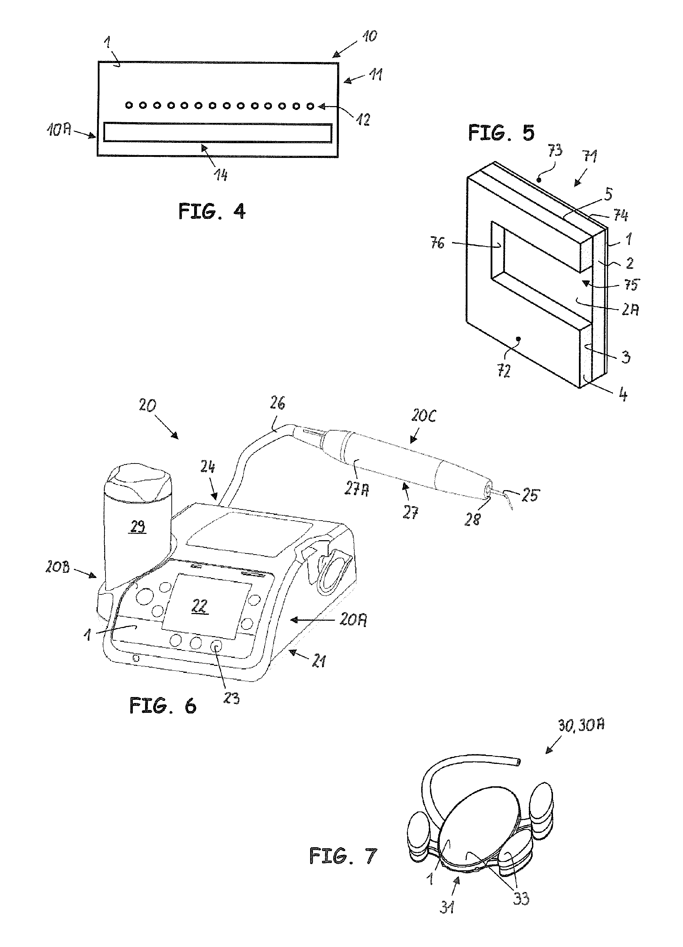

Das in der Figur 5 dargestellte Gehäuseelement 71 umfasst zwecks Einfachheit und Übersichtlichkeit der Darstellung den in der Figur 1 dargestellten Schichtaufbau; selbstverständlich kann das Gehäuseelement 71 jedoch auch den Schichtaufbau der Figuren 2, 3 oder einen anderen Schichtaufbau aufweisen. Neben dem bereits beschriebenen Aufbau des Gehäuseelements 71 zeigt die Figur 5 insbesondere eine bevorzugte Möglichkeit der Integration eines optischen Anzeigeelements in ein mehrschichtiges Gehäuseelement.

Dazu sind bevorzugt die Beschichtung 1 und die erste Kunststofffolie 2 transparent oder transluzid ausgebildet oder weisen zumindest einen transparenten oder transluziden Bereich auf, so wie dies in der Figur 5 für den Abschnitt 2A der erste Kunststofffolie 2 erkennbar ist. Zumindest eine der an der Innenseite 75 der ersten Kunststofffolie 2 vorgesehenen Schichten 3 - 7, insbesondere eine Spritzguss-Kunststoffschicht 4, ist entweder in jenem Bereich, in dem ein optisches Anzeigeelement angeordnet ist, ebenfalls transparent oder transluzid, oder sie weist einen Durchbruch 76 auf.

Der Durchbruch 76 ist vorzugsweise derart bemessen, dass das optische Anzeigeelement darin aufnehmbar ist, vorzugsweise an zumindest einer Kante oder Seite des Durchbruchs 76 lagerbar ist. Das optische Anzeigeelement ist vorzugsweise in dem Durchbruch 76 einbringbar, insbesondere derart, dass es eine der transparenten oder transluziden Schichten, insbesondere die erste Kunststofffolie 2, 2A, kontaktiert. Besonders bevorzugt ist das optische Anzeigeelement, insbesondere ein Bildschirm, in dem Durchbruch 76 eingeklebt.

Gemäß einem Ausführungsbeispiel ist als optisches Anzeigeelement ein Touch-Screen vorgesehen, der in dem Durchbruch 76 aufgenommen ist. Bevorzugt sind alle für den Betrieb und die Bedienung des Touch-Screens benötigten Bauteile, insbesondere eine Platine und elektronische Elemente, an dem Touch-Screen befestigt, so dass insbesondere in dem Gehäuseelement 71 keine elektrisch leitende Schicht oder kein elektrisch leitendes Element 5 zum Betrieb des Touch-Screens vorgesehen ist.

Alternativ ist zumindest ein operativ mit dem optischen Anzeigeelement verbundenes Bedien-, Stell- oder Betätigungselement vorgesehen, das zumindest durch einen Teil der elektrisch leitenden Schicht oder des elektrisch leitenden Elements 5 gebildet ist. Ein derartiges optisches Anzeigeelement umfasst zum Beispiel einen Bildschirm oder zumindest eine Leuchtdiode. Eine derartige Ausführungsform ist zum Beispiel in der Figur 4 dargestellt.

Die Figur 4 zeigt ein Gehäuseelement 11, das aus mehreren Schichten aufgebaut ist, zum Beispiel entsprechend den Ausführungsformen der Figuren 1 - 3 oder gemäß einem anderen mehrschichtigen Aufbau. Das Gehäuseelement 11 ist insbesondere Teil einer medizinischen oder dentalen Vorrichtung 10 mit einer Steuer- oder Regeleinheit 10A. Die Figur 4 zeigt das Gehäuseelement 11 von außen, so dass die Außen- oder Oberfläche durch die, insbesondere kratzfeste, Beschichtung 1 gebildet ist.

Ein optisches Anzeigeelement 12 des Gehäuseelements 11 umfasst mehrere Lichtquellen, insbesondere Leuchtdioden, die entlang einer Geraden oder angrenzend an ein Stell- oder Betätigungselement 14 angeordnet sind. Die einzelnen Lichtquellen sind insbesondere voneinander beabstandet oder durch Abschnitte des Gehäuseelements 11 voneinander getrennt. Vorzugsweise ist für jede Lichtquelle in dem Gehäuseelement 11 ein eigener Durchbruch (entsprechend dem Durchbruch 76 der Figur 5) in zumindest einer der an der Innenseite 75 der ersten Kunststofffolie 2 angeordneten Schichten 3 - 7 vorgesehen, so dass jede Lichtquelle des optischen Anzeigeelements 12 an eine der transparenten oder transluziden Schichten des Gehäuseelements 11, insbesondere an die erste Kunststofffolie 2, 2A, anschließt und / oder diese kontaktiert.

Das Stell- oder Betätigungselement 14 ist unterhalb oder neben dem optischen Anzeigeelement 12 angeordnet und insbesondere operativ mit dem optischen Anzeigeelement 12 verbunden. Zum Beispiel ist es denkbar, dass mit dem Stell- oder Betätigungselement 14 ein Wert eines Parameters der medizinischen oder dentalen Vorrichtung 10 einstellbar ist und dass das optische Anzeigeelement 12 den ausgewählten Wert anzeigt, zum Beispiel durch Aufleuchten oder Erlöschen einzelner Lichtquellen.

Das Stell- oder Betätigungselement 14 ist vorzugsweise durch eine farbige Druckschicht oder Bedruckung 3 an oder auf der Innenseite 75 der ersten Kunststofffolie 2 des Gehäuseelements 11 markiert. Alternativ oder zusätzlich ist das Stell- oder Betätigungselement 14 durch eine dreidimensionale Formung des Gehäuseelements 11, zum Beispiel durch einen Rücksprung oder eine Einbuchtung, für den Anwender kenntlich gemacht.

Bevorzugt umfasst das Stell- oder Betätigungselement 14 zumindest einen Teil einer elektrisch leitenden, insbesondere metallischen, Schicht oder eines auf einer der Schichten 1 - 4, 6, 7 aufgebrachten elektrisch leitenden Elements 5, insbesondere eines auf der ersten Kunststofffolie 2 aufgebrachten oder aufgedruckten elektrisch leitenden Elements 5. Insbesondere umfasst das Stell- oder Betätigungselement 14 zumindest einen Sensor, insbesondere einen kapazitiven oder induktiven Sensor, welcher ausgebildet ist, das Überstreichen mit einem Zeiger zu detektieren und in entsprechender Weise den Wert eines Parameters der medizinischen oder dentalen Vorrichtung 10 einzustellen. Besonders bevorzugt ist das Stell- oder Betätigungselement 14 unlösbar in das Gehäuseelement 11 integriert oder es ist der zumindest eine Sensor von den mehreren Schichten des Gehäuseelements 11 unlösbar umschlossen, so wie dies im Vorstehenden schon mehrmals im Detail beschrieben ist.

Die Figuren 6 - 10 zeigen unterschiedliche medizinische oder dentale Vorrichtungen 20, 30, 40, 50, 60 mit mehrschichtigen Gehäuseelementen 21, 31, 41, 51, 61. Der Aufbau der mehrschichtigen Gehäuseelemente 21, 31, 41, 51, 61 entspricht zum Beispiel den Ausführungsformen der Figuren 1 - 3 oder 5 oder einem anderen mehrschichtigen Aufbau. Die Figuren 6 - 10 zeigen die Gehäuseelement 21, 31, 41, 51, 61 von außen, so dass die Außen- oder Oberfläche vorzugsweise durch die, insbesondere kratzfeste, Beschichtung 1 gebildet ist.

Die medizinische oder dentale Vorrichtung 20 der Figur 6 weist insbesondere eine Steuer- oder Regeleinheit 20A, eine Versorgungseinheit 20B und eine mit einer Hand haltbare Handgriffeinheit 20C zur Übertragung und Abgabe zumindest eines Mediums (Luft, Wasser, Licht), zum Antrieb eines Instruments oder Werkzeugs 25 und zum Einwirken auf eine Behandlungsstelle auf. Vorzugsweise sind die Steuer- oder Regeleinheit 20A und die Versorgungseinheit 20B durch das mehrschichtige Gehäuseelement 21 zu einer Einheit miteinander verbunden, insbesondere zu einer handlichen table-top-Einheit.

Die in der Figur 8 dargestellte medizinische oder dentale Vorrichtung 40 umfasst eine Behandlungseinheit mit einem Patientenstuhl 45, einer Steuer- oder Regeleinheit 40A, einer Versorgungseinheit 40B, einer Beleuchtungseinheit 46 und zumindest einer Handgriffeinheit (nicht dargestellt). Zumindest die Steuer- oder Regeleinheit 40A umfasst ein mehrschichtiges Gehäuseelement 41.

Ähnliche oder gleiche Merkmale der medizinischen oder dentalen Vorrichtungen 20, 40 sind im Folgenden gemeinsam beschrieben:

Die Steuer- oder Regeleinheit 20A, 40A oder das Gehäuseelement 21, 41 weisen eine Bedieneinheit mit einem optischen Anzeigeelement 22, 42 zumindest einem Stell- oder Betätigungselement 23 und einer Steuerung oder Regelung, insbesondere mit einem Mikrocontroller 43, auf. Das optische Anzeigeelement 22, 42 ist insbesondere in einem Durchbruch 76 des mehrschichtigen Gehäuseelements 21, 41 aufgenommen, so wie dies insbesondere unter Bezugnahme auf die Figur 5 beschrieben wurde, so dass die in Zusammenhang mit der Figur 5 genannten Merkmale in entsprechender Weise auf das Gehäuseelement 21, 41 übertragbar sind. Bevorzugt ist das optische Anzeigeelement 42 als Touch-Bildschirm ausgebildet.

Bevorzugt umfassen die mehreren Schichten des Gehäuseelements 21, 41 eine elektrisch leitende, insbesondere metallische, Schicht oder eine Schicht mit zumindest einem elektrisch leitenden Element 5, die / das zumindest einen Teil des Stell- oder Betätigungselements 23 bildet.

Die Versorgungseinheit 20B der medizinischen oder dentalen Vorrichtung 20 umfasst einen Fluidtank 29 und eine Fördervorrichtung 24, welche zum Beispiel eine Pumpe und eine Versorgungsleitung 26 aufweist. Die Versorgungsleitung 26 verbindet das Gehäuseelement 21 mit der Handgriffeinheit 20C, um die Handgriffeinheit 20C mit zumindest einem Fluid und / oder mit elektrischer Energie zu versorgen.

Die Versorgungseinheit 40B der medizinischen oder dentalen Vorrichtung 40 umfasst einen Anschluss an eine Medienquelle und an eine Energiequelle und eine Fördervorrichtung 44, welche zum Beispiel eine Versorgungsleitung 46 aufweist. Die Versorgungsleitung 46 verbindet den Anschluss an die Medien- und Energiequelle mit dem Gehäuseelement 41 und mit der Handgriffeinheit, um die Handgriffeinheit und im Gehäuseelement 41 vorgesehene Bauteile mit zumindest einem Fluid und / oder mit elektrischer Energie zu versorgen.

Die Handgriffeinheit 20C (und in entsprechender Weise die Handgriffeinheit der medizinischen oder dentalen Vorrichtung 40) umfasst ein Griffstück 27, in dem vorzugsweise ein Antrieb zum Antreiben des Werkzeugs 25 vorgesehen ist. Neben dem Antrieb weist die Handgriffeinheit 20C vorzugsweise eine Lichtquelle 28 auf, die insbesondere ringförmig ausgebildet ist und bevorzugt zumindest eine Leuchtdiode aufweist. Das Griffstück 27 umfasst ein Außengehäuse 27A, welches gemäß einem bevorzugten Beispiel ebenfalls mehrschichtigen aufgebtaut ist, zum Beispiel entsprechend den Ausführungsformen der Figuren 1 - 3 oder 5 oder einem anderen mehrschichtigen Aufbau.

Die Steuer- oder Regeleinheit 20A, 40A ist ausgebildet, zumindest einen Betriebsparameter der medizinischen oder dentalen Vorrichtung 20, 40, insbesondere zumindest einen Betriebsparameter der Versorgungseinheit 20B, 40B und / oder der Handgriffeinheit 20C zu steuern oder zu regeln, vorzugeben, über das zumindest eine Stell-oder Betätigungselement 23 zu verändern und / oder an dem optischen Anzeigeelement 22 anzuzeigen. Der zumindest eine Betriebsparameter umfasst zum Beispiel die Art oder Menge eines an die Handgriffeinheit 20C übertragenen Mediums, insbesondere des Mediums aus dem Fluidtank 29, die Drehzahl oder die Frequenz des Antriebs der Handgriffeinheit 20C, 40C oder die von der Lichtquelle 28 abgegebene Wellenlänge.

Die in der Figur 7 dargestellte medizinische oder dentale Vorrichtung 30 umfasst eine Steuer- oder Regeleinheit 30A mit einem Gehäuseelement 31 und zumindest einem Stell-oder Betätigungselement 33. Die Steuer- oder Regeleinheit 30A ist insbesondere mit dem Fuß betätigbar und somit als Fußsteuer- oder Fußregeleinheit 30A ausgebildet. Das Gehäuseelement 31 umfasst mehrere Schichten 1 - 7, zum Beispiel entsprechend den Ausführungsformen der Figuren 1 - 3 oder einem anderen mehrschichtigen Aufbau. Bevorzugt umfasst das Gehäuseelement 31 eine elektrisch leitende, insbesondere metallische, Schicht oder eine Schicht mit zumindest einem elektrisch leitenden Element 5, die / das zumindest einen Teil des Stell- oder Betätigungselements 33 bildet.

Die medizinische oder dentale Vorrichtung 50 der Figur 9 umfasst eine Handgriffeinheit 50C, eine Steuer- oder Regeleinheit 50A und eine Antriebseinheit 50B. Vorzugsweise sind die Steuer- oder Regeleinheit 50A und die Antriebseinheit 50B durch das Gehäuseelement 51 zu einer Einheit miteinander verbunden, insbesondere zu einer kabellosen Einheit, die mit der Handgriffeinheit 50C lösbar verbunden ist.

An oder in dem Gehäuseelement 51 ist ein optisches Anzeigeelement 52, zumindest ein Stell- oder Betätigungselement 53 und eine Steuerung oder Regelung, insbesondere mit einem Mikrocontroller, der Steuer- oder Regeleinheit 50A vorgesehen. In dem Gehäuseelement 51 ist des Weiteren ein Antriebselement oder Motor 55 der Antriebseinheit 50B aufgenommen.

Das Gehäuseelement 51, insbesondere jener Abschnitt des Gehäuseelements 51 mit dem optischen Anzeigeelement 52 und dem zumindest einen Stell- oder Betätigungselement 53, umfasst wiederum mehrere Schichten 1 - 7, zum Beispiel entsprechend den Ausführungsformen der Figuren 1 - 3 oder einem anderen mehrschichtigen Aufbau.

Das optische Anzeigeelement 52 ist insbesondere in einem Durchbruch 76 des Gehäuseelements 51 aufgenommen, so wie dies insbesondere unter Bezugnahme auf die Figur 5 beschrieben wurde, so dass die in Zusammenhang mit der Figur 5 genannten Merkmale in entsprechender Weise auf das Gehäuseelement 51 übertragbar sind.

Bevorzugt umfassen die mehreren Schichten des Gehäuseelements 51 eine elektrisch leitende, insbesondere metallische, Schicht oder eine Schicht mit zumindest einem elektrisch leitenden Element 5, die / das zumindest einen Teil des Stell- oder Betätigungselements 53 bildet.

Die Steuer- oder Regeleinheit 50A ist zum Beispiel ausgebildet, zumindest einen Betriebsparameter der medizinischen oder dentalen Vorrichtung 50, insbesondere zumindest einen Betriebsparameter der Antriebseinheitseinheit 50B und / oder der Handgriffeinheit 50C zu steuern oder zu regeln, vorzugeben, über das zumindest eine Stell- oder Betätigungselement 53 zu verändern und / oder an dem optischen Anzeigeelement 52 anzuzeigen. Der zumindest eine Betriebsparameter umfasst zum Beispiel die Drehzahl oder das Drehmoment des Antriebselements 55.

Zur Verbindung mit einer Versorgungeinheit weist das Gehäuseelement 51 zumindest ein Verbindungselement 56 auf, zum Beispiel einen elektrischen Kontakt zum Übertragen von elektrischer Energie und / oder von elektrischen Datensignalen oder ein Kupplungselement zur Übertragung eines Mediums.

Die medizinische oder dentale Vorrichtung 60 der Figur 10 umfasst eine Reinigungs- oder Pflegeeinheit 60D für ein medizinisches oder dentales Instrument, insbesondere einen Sterilisator, mit einem Gehäuseelement 61. An der Reinigungs- oder Pflegeeinheit 60D oder an dem Gehäuseelement 61 ist eine Steuer- oder Regeleinheit 60A mit einem optischen Anzeigeelement 62 und mit einer Steuerung oder Regelung, insbesondere mit einem Mikrocontroller, vorgesehen.

Je nach Ausführungsform ist das optische Anzeigeelement 62 als Touch-Screen oder als Bildschirm ohne Eingabefunktion ausgebildet. In letzterem Fall ist vorzugsweise anschließend an das optische Anzeigeelement 62 zumindest ein Stell- oder Bedienelement vorgesehen.

Das Gehäuseelement 61, insbesondere jener Abschnitt des Gehäuseelements 61 mit dem optischen Anzeigeelement 62 und optional mit dem zumindest einen Stell- oder Betätigungselement, umfasst wiederum mehrere Schichten 1 - 7, zum Beispiel entsprechend den Ausführungsformen der Figuren 1 - 3 oder einem anderen mehrschichtigen Aufbau.

Das optische Anzeigeelement 62 ist insbesondere in einem Durchbruch 76 des Gehäuseelements 61 aufgenommen, so wie dies insbesondere unter Bezugnahme auf die Figur 5 beschrieben wurde, so dass die in Zusammenhang mit der Figur 5 genannten Merkmale in entsprechender Weise auf das Gehäuseelement 61 übertragbar sind.

Bevorzugt umfassen die mehreren Schichten des Gehäuseelements 61 eine elektrisch leitende, insbesondere metallische, Schicht oder eine Schicht mit zumindest einem elektrisch leitenden Element 5, die / das zumindest einen Teil des Stell- oder Betätigungselements bildet.

Die Steuer- oder Regeleinheit 60A ist zum Beispiel ausgebildet, zumindest ein Reinigungs- oder Pflegeprogramm der medizinischen oder dentalen Vorrichtung 60 zu steuern oder zu regeln, über den Touch-Screen oder das zumindest eine Stell- oder Betätigungselement auszuwählen und / oder an dem optischen Anzeigeelement 62 anzuzeigen.

Die Erfindung ist nicht auf die beschriebenen Ausführungsbeispiele beschränkt, sondern umfasst alle Ausführungen, die das prinzipielle, sinngemäße Funktionsprinzip der Erfindung anwenden oder beinhalten. Des Weiteren sind alle Merkmale aller beschriebenen und dargestellten Ausführungsbeispiele miteinander kombinierbar.

## Patentansprüche

1. Gehäuseelement (11, 21, 31, 41, 51, 61, 71) einer medizinischen oder dentalen Vorrichtung (10, 20, 30, 40, 50, 60), wobei das Gehäuseelement (11, 21, 31, 41, 51, 61, 71) aus mehreren Schichten (1 - 7) aufgebaut ist und einen Innenraum (72) der medizinischen oder dentalen Vorrichtung (10, 20, 30, 40, 50, 60) gegenüber einem Äußeren (73) abgrenzt, **dadurch gekennzeichnet, dass**
die mehreren Schichten (1 - 7) umfassen: Eine erste Kunststofffolie (2) mit einer dem Äußeren (73) zugewandten Außenseite (74) und einer dem Innenraum (72) zugewandten Innenseite (75) und eine Spritzguss-Kunststoffschicht (4), wobei zumindest ein Teil der Innenseite (75) und / oder der Außenseite (74) der ersten Kunststofffolie (2) mit der Spritzguss-Kunststoffschicht (4) überspritzt ist.

2. Gehäuseelement (11, 21, 31, 41, 51, 61, 71) nach Anspruch 1, **dadurch gekennzeichnet, dass**
zumindest ein Teil (2A) der ersten Kunststofffolie (2) transparent oder transluzid ist.

3. Gehäuseelement (11, 21, 31, 41, 51, 61, 71) nach Anspruch 1 oder 2, **dadurch gekennzeichnet, dass**
zumindest ein Teil der ersten Kunststofffolie (2) farbig bedruckt (3) ist.

4. Gehäuseelement (11, 21, 31, 41, 51, 61, 71) nach einem der Ansprüche 1 - 3, **dadurch gekennzeichnet, dass**
an der Innenseite (75) der ersten Kunststofffolie (2) zumindest ein optisches Anzeigeelement (22, 42, 52, 62) vorgesehen ist, zum Beispiel ein optisches Halbleiterelement oder ein Bildschirm.

5. Gehäuseelement (11, 21, 31, 41, 51, 61, 71) nach Anspruch 4, **dadurch gekennzeichnet, dass**
das zumindest eine optische Anzeigeelement (22, 42, 52, 62) die Innenseite (75) der ersten Kunststofffolie (2) kontaktiert.

6. Gehäuseelement (11, 21, 31, 41, 51, 61, 71) nach Anspruch 4 oder 5, **dadurch gekennzeichnet, dass**
die Spritzguss-Kunststoffschicht (4) einen Durchbruch (76) aufweist, in welche das zumindest eine optische Anzeigeelement (22, 42, 52, 62) eingefügt ist.

7. Gehäuseelement (11, 21, 31, 41, 51, 61, 71) nach einem der Ansprüche 1 - 6, **dadurch gekennzeichnet, dass**
an der Innenseite (75) und / oder an der Außenseite (74) der ersten Kunststofffolie (2) zumindest ein elektrisch leitendes Element (5) vorgesehen ist, insbesondere eine elektrische Leiterbahn oder ein Sensor.

8. Gehäuseelement (11, 21, 31, 41, 51, 61, 71) nach einem der Ansprüche 1 - 7, **gekennzeichnet durch**
eine mit der ersten Kunststofffolie (2) verbundene zweite Kunststofffolie (6), wobei zumindest ein elektrisch leitendes Element (5) auf der zweiten Kunststofffolie (6) vorgesehen ist.

9. Gehäuseelement (11, 21, 31, 41, 51, 61, 71) nach einem der Ansprüche 7 oder 8, **dadurch gekennzeichnet, dass**
das zumindest eine elektrisch leitende Element (5) zwischen der ersten Kunststofffolie (2) und der zweiten Kunststofffolie (6) oder zwischen der ersten Kunststofffolie (2) und der Spritzguss-Kunststoffschicht (4) angeordnet ist.

10. Gehäuseelement (11, 21, 31, 41, 51, 61, 71) nach einem der Ansprüche 1 - 9, **gekennzeichnet durch**
eine an der Außenseite (74) der ersten Kunststofffolie (2) vorgesehene, insbesondere kratzfeste, Beschichtung (1).

11. Gehäuseelement (11, 21, 31, 41, 51, 61, 71) nach einem der Ansprüche 1 - 10, **dadurch gekennzeichnet, dass**
das Gehäuseelement (11, 21, 31, 41, 51, 61, 71) dreidimensional geformt ist.

12. Medizinische oder dentale Vorrichtung (10, 20, 30, 40, 50, 60), welche zumindest eine der folgenden Einheiten, an welcher ein Gehäuseelement (11, 21, 31, 41, 51, 61, 71) nach einem der Ansprüche 1 - 11 vorgesehen ist, aufweist: eine Steuer- oder Regeleinheit (10A, 20A, 30A, 40A, 50A, 60A) mit zumindest einem Stellelement und / oder Bedienelement (14, 23, 33, 53), und / oder einem Mikrocontroller (43); eine Versorgungseinheit (20B, 40B) mit zumindest einer Fördervorrichtung (24, 44) für ein Medium und / oder mit einer Energiequelle; eine Antriebseinheit (50B) zum Antrieb eines medizinischen oder dentalen Instruments (25) mit zumindest einem Antriebselement (55); eine mit einer Hand haltbare Handgriffeinheit (50C) zur Übertragung oder Abgabe von Energie und / oder eines Mediums und / oder zum Einwirken auf eine Behandlungsstelle und / oder zum Antrieb eines Werkzeugs (25); eine Übertragungseinheit mit zumindest einem Übertragungselement zur Übertragung von Energie und / oder eines Mediums und / oder einer Antriebsbewegung; eine Reinigungs- oder Pflegeeinheit (60D) für ein medizinisches oder dentales Instrument mit zumindest einem Reinigungs- oder Pflegeelement zum Reinigen oder Pflegen eines medizinischen oder dentalen Instruments und / oder mit zumindest einem Übertragungselement zur Übertragung eines Reinigungs- oder Pflegemediums auf ein medizinisches oder dentales Instrument.

13. Verfahren zur Herstellung eines Gehäuseelements (11, 21, 31, 41, 51, 61, 71) einer medizinischen oder dentalen Vorrichtung (10, 20, 30, 40, 50, 60), wobei das Gehäuseelement (11, 21, 31, 41, 51, 61, 71) aus mehreren Schichten (1 - 7) aufgebaut ist und einen Innenraum (72) gegenüber einem Äußeren (73) abgrenzt, wobei die mehreren Schichten (1 - 7) eine erste Kunststofffolie (2) mit einer dem Äußeren (73) zugewandten Außenseite (74) und einer dem Innenraum (72) zugewandten Innenseite (75) und eine Spritzguss-Kunststoffschicht (4) umfassen, wobei zumindest ein Teil der Innenseite (75) und / oder der Außenseite (74) der ersten Kunststofffolie (2) mit der Spritzguss-Kunststoffschicht (4) überspritzt ist und wobei das Verfahren durch folgende Schritte gekennzeichnet ist: Zur Verfügung stellen der ersten Kunststofffolie (2) und Spritzvergießen zumindest eines Teils der Innenseite (75) und / oder der Außenseite (74) der ersten Kunststofffolie (2) mit einem Spritzgusskunststoff (4).

14. Verfahren nach Anspruch 13, **dadurch gekennzeichnet, dass** das Gehäuseelement (11, 21, 31, 41, 51, 61, 71) dreidimensional geformt wird.

15. Verfahren nach Anspruch 13 oder 14, **dadurch gekennzeichnet, dass** das Verfahren noch zumindest einen der folgenden Schritte aufweist:
- zumindest ein Teil (2A) der Innenseite (75) der ersten Kunststofffolie (2) wird farbig bedruckt;
- zumindest ein elektrisches leitendes Element (5) wird auf der Innenseite (75) und / oder auf der Außenseite (74) der ersten Kunststofffolie (2) vorgesehen;
- eine zweite Kunststofffolie (6) mit zumindest einem elektrisch leitenden Element (5) wird zur Verfügung gestellt und mit der ersten Kunststofffolie (2) verbunden;
- an der Innenseite (75) der ersten Kunststofffolie (2) wird zumindest ein optisches Anzeigeelement (22, 42, 52, 62) angeordnet, insbesondere derart, dass das zumindest eine optische Anzeigeelement (22, 42, 52, 62) die Innenseite (75) der ersten Kunststofffolie (2) kontaktiert.
